# EUROPEAN PATENT APPLICATION

(11) **EP 3 620 880 A1**
(43) Date of publication of application: **11.03.2020**
(21) Application number: 18192474.7
(22) Date of filing: 04.09.2018
(51) Int. Cl.: G05D 1/00, G06N 3/00

(54) **A METHOD AND A DEVICE FOR DERIVING A DRIVING STRATEGY FOR A SELF-DRIVING VEHICLE AND AN ELECTRONIC CONTROL UNIT FOR PERFORMING THE DRIVING STRATEGY AND A SELF-DRIVING VEHICLE COMPRISING THE ELECTRONIC CONTROL UNIT**

(71) Applicant: Autonomous Intelligent Driving GmbH, 80805 München (DE)
(72) Inventor: GOLAKIYA, Nirav, 81929 München (DE); IEGOROV, Andrii, 80333 München (DE); FERRONI, Francesco, 81379 München (DE); MEERTENS, Roland, 80807 München (DE)
(74) Representative: Hofstetter, Schurack & Partner

(57) **Abstract**

The invention is concerned with a method for deriving a driving strategy (T7) for a self-driving vehicle (23) in at least one specific traffic situation. The derivation of the driving strategy (T7) is based on an artificial neural network (20). A reinforcement learning is applied to train the artificial neural network (20) based on description data (T4) of the at least one specific traffic situation. For each of the at least one specific traffic situation, the description data (T4) is generated by numerical simulations of the respective specific traffic situation by means of a mathematical model (17). The description data (T4) is fed to the artificial neural network (20) several times and the reinforcement learning is applied each time the artificial neural network (20) until the tentative driving strategy (T5) is a successful driving strategy (T7) according to a predefined driving evaluation criterion (22).

## Description

The invention is concerned with a method for deriving a driving strategy for a self-driving vehicle in at least one specific traffic situation. The derivation of the driving strategy is based on an artificial neural network. The invention also provides a device for performing the method for deriving a driving strategy. The invention further provides an electronic control unit of a self-driving vehicle for performing the driving strategy. Finally, the invention is also concerned with a self-driving vehicle comprising the electronic control unit.

Automotive safety has been an important issue in the field of automotive technology. Attempts to improve automobile safety have been focused on improving the vehicle itself, the driving conditions and the driving skills of the driver. However, with the development of autonomous-driving or self-driving vehicles, various new measures and/or technologies and/or strategies concerned with the safety of the vehicle need to be developed. Hence, there is a requirement in the field of automotive technology to create a new technology to enable a protection of the self-driving vehicle and the surroundings of the self-driving vehicle from damage, for example, in the case of a crash or near-crash situation.

Document US 2018/ 075 309 A1 discloses aggregating a plurality of video segments associated with near collision events from a plurality of vehicles and labeling each video segment with the cause of the respective near-collision event. Then, filtering the plurality of video segments based on the respective cause is performed and an artificial neural network of an autonomous vehicle control module is trained based on the filtered plurality of video segments and respective user responses. The neural network thus learns the strategy from the user response for each specific collision event or traffic situation. However, the document does not disclose letting the neural network derive a strategy by itself until a successful driving strategy is derived. For each specific traffic situation, a human user response is necessary.

It is an object of the present invention to provide an efficient method for deriving a driving strategy for a self-driving vehicle.

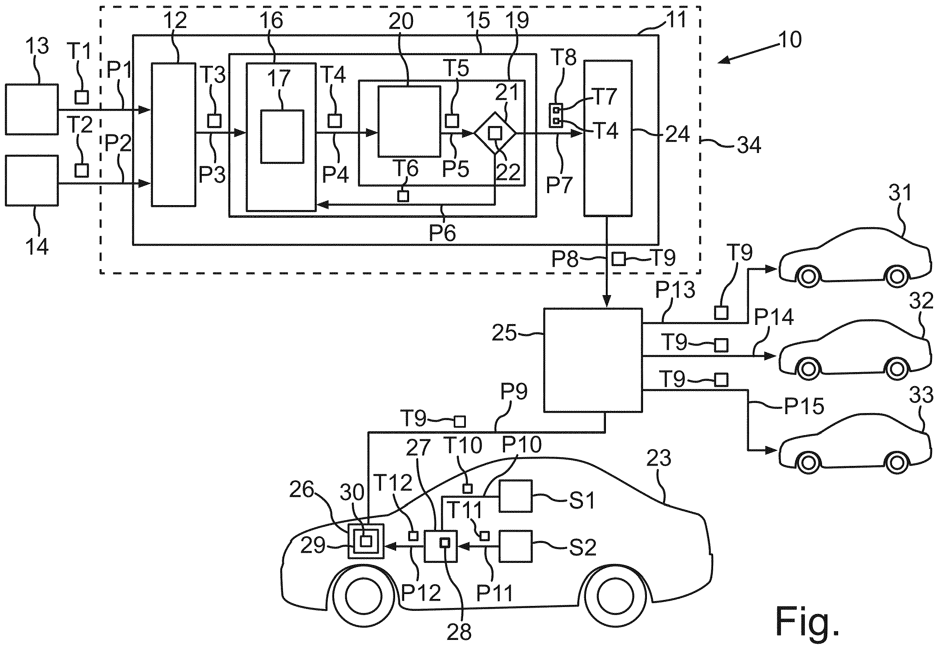

The object is accomplished by the subject matter of the independent claims. Advantageous developments with convenient and non-trivial further embodiments of the invention are specified in the following description, the dependent claims and the figure.

The invention provides a method for deriving a driving strategy for a self-driving vehicle in at least one predefined or specific traffic situation. The at least one specific situation describes a near collision situation and/or a situation with a high collision risk, as may be defined by a predefined near-collision criterion. The at least one specific situation can be a near collision situation of the vehicle with a physical object, such as static object, e.g., a standing vehicle or traffic board sign on a side way of a street, or a mobile object, e.g., a moving vehicle in front of the vehicle or in the proximity to the vehicle.

The derivation of the driving strategy is based on an artificial neural network. A reinforcement learning is applied to train the artificial neural network based on description data of the at least one specific traffic situation. This is of advantage, because based on the description data of the at least one specific traffic situation, the artificial neural network derives a tentative driving strategy by itself, without the necessity of any user response data, and then owing to the reinforcement learning, this tentative driving strategy by itself, without the necessity of any user response data, and then, owing to the reinforcement learning, this tentative driving strategy may be improved automatically.

The description data is generated by numerical simulations of the respective specific traffic situation by means of a mathematical model. The mathematical model can be based on mathematical equations to perform numerical simulations such as crash-simulations and/or the mathematical model can be based on at least one probabilistic or stochastic model. At least one parameter of the specific traffic situation, such as vehicle's velocity, road type, traffic density, time of the day, may be provided as boundary and/or operating condition to the numerical simulation. In other words, a virtual and/or a digital representation of a physical vehicle traversing through a physical volume is developed by means of a mathematical model. The numerical simulations are performed on a computing system in a laboratory. This is of advantage, because this enables the acquisition of the description data in an efficient and cost effective manner so that an efficient driving strategy can be derived using the reinforcement learning as compared to cases, where the description data is obtained by performing test driving at conditions corresponding to the at least one specific traffic situation, which in turn are time consuming and costly and moreover, an exact replication of the at least one specific traffic situation is very difficult and/or rather impossible due to safety concerns of a driver and vehicle performing the test driving.

Furthermore, according to the invention, by feeding of the description data to the artificial neural network several times, the artificial neural network is confronted with the at least one specific traffic situation repeatedly, i.e., each time and derives a tentative driving strategy in reaction to the respective at least one specific traffic situation. The reinforcement learning is applied each time the artificial neural network has passed through the numerically simulated specific traffic situation on the basis of the tentative driving strategy (in its then current state) until the tentative driving strategy is a successful driving strategy according to a predefined evaluation criterion. In other words, the description data obtained from the numerically simulated specific traffic situation is fed to the artificial neural network several times, the reinforcement learning is applied to train the artificial neural network each time the traffic situation has been passed through. This enables the artificial neural network to iteratively derive or evolve a tentative driving strategy in reaction to the respective at least one specific traffic situation. The process of feeding the description data and the derivation of the tentative driving strategy is thus conducted in an iterative manner, the iterative process can be conducted by means of a computer program of the same said computing unit or another computing unit. The iterative process is conducted until the tentative driving strategy is a successful driving strategy according to a predefined evaluation criterion. For example, the predefined evaluation criterion can be a zero crash and/or zero collision condition, in which a crash and/or collision of the vehicle with a physical object, as described according the numerically simulated specific traffic situation, is avoided. This is of advantage, because no test driving with a physical self-driving car is required and the artificial neural network experiences the real traffic situations by means of numerical simulations in the computing unit or a simulator and learns an appropriate driving behavior by means of reinforcement learning. This enables an efficient method for deriving a driving strategy for a self-driving vehicle.

The invention also comprises embodiments that provide features which afford additional technical advantages.

In one embodiment, the at least one specific traffic situation can comprise at least one situation according to which at a point of time, there is no obstacle in front of the self-driving vehicle and/or in a field of view of the self-driving vehicle, but at a next point of time, an obstacle appears in front of the self-driving vehicle which lies in the current driving path of the self-driving vehicle, i.e., which may lead to a collision of the self-driving vehicle with an obstacle and/or cause damage to the self-driving vehicle. One specific traffic situation can be, for example, a traffic situation on a street crossing at an urban location where two nearly orthogonal streets cross at the street crossing, wherein the both the streets comprise of buildings and/or shops along the sideways. So that the self-driving vehicle cannot view the other orthogonally crossing street apart from the part at the street crossing. In this case, if the self-driving vehicle approaches the street crossing and a traffic signal of the street corresponding to the self-driving vehicle is drive on, whereas a traffic signal of the street orthogonal to that of the self-driving vehicle is to stop. However, if another vehicle on the orthogonal street ignores the stop sign and drives through the street crossing, then in this case there as possibility of a collision between the self-driving vehicle and the other vehicle. Such specific traffic situations can be simulated numerically and driving strategy can be derived for the self-driving vehicle. For example, the self-driving vehicle be made to drive at a lower speed near the street crossing at an urban location, where the probability of such specific traffic situations can be high. This enables an application of power brakes on the self-driving vehicle and a collision with the other vehicle can be avoided. This is of advantage, because such specific traffic situations can be simulated in a virtual environment by means of numerical simulations at various operating conditions, which in turn are extremely difficult and expensive and/or nearly impossible to realize by means of test driving. This enables the generation of corresponding description data for training the artificial neural network and an appropriate driving strategy can be derived by means of reinforcement learning.

In one embodiment, the predefined evaluation criterion can comprise a criterion according to which no damage to the self-driving vehicle at the at least one specific traffic situation takes place. This is of advantage, because this enables the artificial neural network to derive an appropriate driving strategy to achieve an ideal scenario, where the self-driving vehicle has no damage, which in turn ensures that the users or people inside the self-driving vehicle are in safety. It is further thinkable, that a hierarchical priority is defined as the predefined evaluation criterion. The hierarchical priority can comprise of priority values, in which the safety and/or no damage to a person/persons inside the vehicle and/or a person/persons in an external proximal vehicle environment has the highest priority value followed by a no damage condition to the self-driving vehicle. This is of importance, in a case and/or a specific traffic situation where a situation could involve a choice between a damage to the self-driving vehicle and a damage to a person in the external proximal vehicle environment, which in this case according hierarchical priority, the safety of the person in the external proximal vehicle environment is preferred and at the same the damage to the self-driving vehicle is limited to a minimal condition, such that the person/persons inside the self-driving vehicle are safe.

In one embodiment, the mathematical model can be based on real life data of the at least one specific traffic situation collected from police records for accidents. This is of advantage, because based on the real life data of the specific traffic situation collected from the police records for accidents and/or collision situation that has occurred at various possible conditions, such as on high ways or urban traffic conditions and/or different weather conditions. Such a specific traffic situation can be numerically simulated and the corresponding description data can be generated. The generated description data corresponding to the accidents and/or collision situations can be fed to the artificial neural network, which in turn can enable to derive an appropriate driving strategy. This enables to derive a driving strategy to avoid accident and/or collision situation in the future which had occurred in real life.

In one embodiment, the mathematical model can be based on schooling data of the at least one specific traffic situation collected from driving schools records. This enables a procurement of the at least one traffic situation collected from driving school records, such a traffic situation can be of interest to consider specific traffic situation which is rare and complex. Such a specific traffic situation can be numerically simulated and the corresponding description data can be generated. The generated description data corresponding to the traffic situation according to the driving school records can be fed to the artificial neural network, which in turn can enable to derive an appropriate driving strategy. This enables to derive a driving strategy for certain rare and complex traffic situations which have occurred in a driving school environment. This enables to derive an appropriate driving strategy for such a rare and complex traffic situation which can in the future on a street, for example in an urban location.

In one embodiment, the description data generated by the mathematical model can describe a map of a surrounding of the self-driving vehicle equivalent to a map generated by means of a sensor data fusion of sensors of the self-driving vehicle. In other words, the description data generated by the mathematical model by means of the numerical simulation is a virtual representation of the physical environment of the self-driving vehicle. The physical environment of the self-driving vehicle can be described by such a map of the surrounding of the self-driving vehicle which is equivalent to the map generated by means of the sensor data fusion of sensors of the self-driving vehicle. The self-driving vehicle itself can comprise several sensors for generating a map of the surroundings, such as LIDAR sensors and/or the CCD sensors and/or radar sensors and/or location systems such as GPS. This is of advantage, because this ensures that the description data generated by the mathematical model represent a physical environment of the self-driving vehicle, which in turn would enable the artificial neural network to derive an appropriate strategy in response to the description data which is analogous to a real life situation of a physical self-driving vehicle in a physical environment. An additional advantage is given in that the map represents the environment independent of the type of sensors used for creating the map, as the map is the output of the sensor data fusion.

In one embodiment, the numerical simulation of the at least one specific traffic situation and the feeding of the generated description data by the numerical simulation to the artificial neural network can take place outside the self-driving vehicle. In other words, the numerical simulation for the at least one specific traffic situation can be conducted on a computing unit, for example, in a laboratory. This is of advantage because the computing unit for conducting such numerical simulations can require higher computing capacities, such as a processing unit for solving the mathematical model, wherein the solving of the mathematical model can involve various iterations till a convergence is achieved. Such simulations can require parallel computing facilities, in which case a plurality of computing units and/or processing units would be required. Furthermore, the computing unit can require a storage unit with large storage capacities in order to store all the generated description data as well as intermediate generated data from various iterations of the numerical simulations and/or a communication unit and/or a power unit and/or a housing of the computing unit. Such a computing unit can require a large physical space which would be possible in a location such as a laboratory. Similarly, the feeding of the generated description data to the artificial neural network, so that an appropriate driving strategy can be derived by the reinforcement learning can be conducting by the same computing unit or another computing unit in the same location and/or a different location, wherein then the communication and/or transfer of the generated description data by the numerical simulations can be conducted by wireless and/or a wired communication unit. This is of advantage, because such a communicating unit can be efficiently realized and/or installed in a location such as laboratory and would be very difficult to install such a computing unit inside a self-driving vehicle due to the required physical space and weight of the computing unit. Furthermore, a collection of the real life data of the at least one specific traffic situation from police records for accidents and the schooling data of the at least one specific traffic situation from driving school records can conducted by the computing unit or another computing unit. The collected real life data and the schooling data by the computing unit can be used for the numerical simulations to generate the description data accordingly by the computing unit or another computing unit.

In one embodiment, the trained artificial neural network can be used as a prototype for other artificial neural networks that are used in the self-driving vehicle and at least one other self-driving vehicle or in other words, each copy of the prototype may be used in one specific self-driving vehicle. In other words, the trained artificial network can transferred as a network data file to backend server, such as cloud. From the backend server the network data file can be sent other self-driving vehicle or a plurality of self-driving vehicles wirelessly. This is of advantage, because a computation of the numerical simulations and the generation of the appropriate driving strategy for the at least one specific traffic situation by means of reinforcement learning needs to be conducted just once, as the obtained driving strategy can be used by the other self-driving vehicle and/or the plurality of self-driving vehicle in addition to the self-driving vehicle. Hence, this enables to an efficient and cost effective method for a derivation of the driving strategy for the plurality of self-driving vehicles.

The invention also comprises a device for deriving a driving strategy that a self-driving vehicle may apply in at least one respective specific traffic situation. The device may be in form of a computing unit which can be located a computing facility such as laboratory.

The invention also comprises an electronic control unit for a self-driving vehicle, wherein the electronic control unit comprises a processing device that is designed to operate an artificial neural network that is configured to recognize at least one specific traffic situation and on recognizing the at least one specific traffic situation to provide a successful driving strategy according to a predefined driving evaluation criterion. In other words, once an artificial neural network has been trained on the basis of the inventive method, the finally trained neural network may be put into operation by means of the electronic control unit. This is of advantage, because this enables the self-driving vehicle to overcome the at least one specific traffic situation in an efficient manner.

The invention further comprises a self-driving vehicle comprising at least one sensor for generating a digital map of surroundings of the self-driving vehicle. The map may be generated on the basis of said sensor data fusion. The self-driving vehicle also comprises the electronic control unit. The self-driving vehicle itself can comprise several sensors for generating the digital map of the surroundings, such as at least one LIDAR sensor and/or at least one CCD sensor and/or at least one radar sensor and/or a GNSS unit (GNSS - Global navigation satellite system), e.g., a GPS unit (GPS - Global positioning system).

The invention also comprises the various combinations of the features of the described embodiments, if not stated otherwise.

In the following an exemplary implementation of the invention is described. The figure shows:
Fig. a schematic illustration of an embodiment of a device for deriving a driving strategy for a self-driving vehicle;

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figure identical reference signs indicate elements that provide the same function.

The figure shows a schematic illustration of an embodiment of a device 10. The device 10 may be a computing unit 11. The computing unit 11 comprises a first electronic unit 12 which may comprise an NIC (network interface controller) to receive real life data T1 of at least one specific traffic situation collected from, e.g., police records 13 for accidents, which is shown by a transmission path P1. The first electronic unit 12 may further receive schooling data T2 of the at least one specific traffic situation collected from driving schools records 14, which is shown by a transmission path P2. The first electronic unit 12 may further comprise a storage unit, for example, a hard disk to store the collected real life data T1 and the schooling data T2 of the at least one specific traffic situation. The first electronic unit 12 may prepare a list T3 of the collected real life data T1 and the schooling data T2. The list T3 can comprise of operating and boundary conditions, such as the velocity of a vehicle, road conditions, weather conditions, traffic density. The list T3 comprising of the aforementioned operating and boundary conditions of each of the data of the real life data T1 and the schooling data T2 may be sent to a second electronic unit 15 of the computing unit 11. The list T3 can be sent to the second electronic control unit 15, as shown by a transmission path P3, by means of wireless systems, e.g., cellular, WiFi, Bluetooth, RF, NFC and/or wired systems, e.g., Ethernet and/or vehicle bus connections.

The second electronic unit 15 may comprise of a first processor unit 16 comprising, e.g., a set of GPUs, CPUs, microprocessor, TPUs. The first processor unit 16 comprises of a computer code consisting of a mathematical model 17. The first processor unit receives the list T3 and sends a first set of operating and boundary conditions to the mathematical model 17. The first processor unit simulates the mathematical model 17 and generates a description data T4. The description data T4 generated by the mathematical model 17 describes a map of a surrounding of a self-driving vehicle 23 equivalent to a map generated by means of a sensor data fusion of sensors S1, S2 of the self-driving vehicle 23.

The description data T4 can be sent to a second processor unit 19 of the second electronic unit 15 wirelessly and/or wired, shown by a transmission path P4. The second processor unit 19 comprises of a computer code consisting of an artificial neural network 20. A reinforcement learning is applied to train the artificial neural network 20 based on description data T4 of the at least one specific traffic situation. For each of the at least one traffic situation, the description data T4 is generated by numerical simulations of the respective traffic situations by means of the mathematical model 17, wherein the description data T4 is fed to the artificial neural network 20. When the artificial neural network 20 is confronted by the at least one specific traffic situation, the reinforcement learning is applied as the artificial neural network 20 has passed through the numerically simulated specific traffic situation and a tentative driving strategy T5 is generated. The tentative driving strategy T5 is sent to a decision module 21, shown by a transmission path P5. The decision module 21 comprises of a predefined driving evaluation criterion 22.

The predefined driving evaluation criterion 22 may comprise a criterion according to which no damage to the self-driving vehicle 23 at the at least one specific traffic situation takes place.

If at a point of time, the predefined evaluation criterion 22 is not fulfilled. The decision module 21 sends a repeat signal T6 to the first processor unit 16, which is shown by a transmission path P6. The first processor unit 16 upon receiving the repeat signal T6 in turn sends the description data T4 at the next point of time and further more to the artificial neural network 20. By feeding the description data T4 to the artificial neural network 20 several times, the artificial neural network 20 is confronted with the at least one specific traffic situation each time and derives a tentative driving strategy T5 in reaction to the respective at least one specific traffic situation. The reinforcement learning is applied each time the artificial neural network 20 has passed through the numerically simulated specific traffic situation on the basis of the tentative driving strategy T5 until the tentative driving strategy T5 is a successful driving strategy according to a predefined driving evaluation criterion 22. Hence, an iterative process is conducted until the tentative driving strategy T5 is a successful driving strategy T7 according to a predefined evaluation criterion.

A strategy data file T8 comprising the successful driving strategy T7 and the corresponding description data T4 of the at least one specific traffic situation according to the list T3 is sent to a third electronic unit 24, shown by a transmission path P7. The third electronic unit 24 can comprise can comprise a storage unit to store the successful driving strategy T7.

The at least one specific traffic situation can comprise at least one situation that at a point of time, there is no obstacle in front of the self-driving vehicle 23 and/or in a field of view of the self-driving vehicle 23, but at a next point of time, an obstacle appears in front of the self-driving vehicle which leads to a collision of the self-driving vehicle 23 with an obstacle and/or cause damage to the self-driving vehicle 23. One specific traffic situation can be, for example, a traffic situation on a street crossing at an urban location (not shown in figure) where two nearly orthogonal streets cross at the street crossing, wherein the both the streets comprise of buildings and/or shops along the sideways. So that the self-driving vehicle cannot view the other orthogonally crossing street apart from the part at the street crossing. In this case, if the self-driving vehicle 23 approaches the street crossing and a traffic signal of the street corresponding to the self-driving vehicle 23 is drive on, whereas a traffic signal of the street orthogonal to that of the self-driving vehicle 23 is to stop. However, if another vehicle on the orthogonal street ignores the stop sign and drives through the street crossing, then in this case there as possibility of a collision between the self-driving vehicle 23 and the other vehicle. Such specific traffic situations can be simulated numerically and successful driving strategy T7 can be derived for the self-driving vehicle 23. For example, the self-driving vehicle 23 be made to drive at a lower speed near the street crossing at an urban location, where the probability of such specific traffic situations can be high. This enables an application of power brakes on the self-driving vehicle 23 and a collision with the other vehicle can be avoided.

The method of feeding the artificial intelligence neural network 20 with another description data T4 of the at least one specific traffic situation according to the list T3 is repeated until a corresponding successful driving strategy T7 to that particular description data T4 is achieved. Then a corresponding strategy data file T8 is send to the third electronic control unit 24. The method is repeated till all entries of the description data T4 from the list T3 are solved, that is a successful strategy T7 to each of the all the entries of the description data T4 from the list T3 are obtained.

Furthermore, the numerical simulation of the at least one specific traffic situation and the feeding of the generated description data T4 by the numerical simulation to the artificial neural network 20 takes place outside the self-driving vehicle 23, such as a laboratory 34.

Once a successful driving strategy T7 to each of all the entries of the description data T4 from the list T3 is obtained. A network data file T9 comprising of all the entries of the successful driving strategy T7 is generated. The generated network data file T9 can be sent to a backend server unit 25, e.g., a computing unit or a cloud, by means of a wireless connection, shown by a transmission path P8.

The backend server unit 25 can send the network data file T9 to an electronic control unit 26 of the self-driving vehicle 23 wirelessly, shown by a transmission path P9. In embodiment of the self-driving vehicle 23 shown in the figure, the self-driving vehicle 23 comprises of two sensors S1, S2, such as a CCD sensor S1 and an LIDAR sensor S2. At a point of time, the CCD sensor S1 can send a first sensor signal T10 comprising of information in the form of color and/or infrared pixels of a camera image of the proximal physical environment of the self-driven vehicle 23 to a processor unit 27, as shown by a transmission path P10. Furthermore, the LIDAR sensor 18 can send a second sensor data T11 to the processor unit 27, as shown by a transmission path P11. In this case of the LIDAR sensor 18, the information of the surroundings of the self-driven vehicle 23 is in the form of 3D representations of the surroundings. The processor unit 27 can comprise a computer program 28 which is designed to perform a sensor fusion of the first sensor data T10 and the second sensor data T11. By means of the sensor fusion a sensor fusion data T12 is generated. The sensor fusion data T12 comprises of information about the map of the surroundings of the self-driving vehicle at that point of time. The sensor fusion data T12 is sent to the electronic control unit 26, as shown by a transmission path P12.

The electronic control unit 26 comprises a processing device 29 that is designed to operate an artificial neural network 30 that is configured to recognize at least one specific traffic situation by means of the sensor fusion data T12. The least one specific traffic situation by means of the sensor fusion data T12 can be compared to the network data file T9 by means of a pattern recognition algorithm. At the point of time, the map of the physical surroundings of the self-driving vehicle 23 is compared to a virtual map of the description data T4 contained in the network data file T9 by means of the pattern recognition algorithm. Once a match is found, that is comparison fulfills a predefined matching criterion, then at least one specific traffic situation is recognized. On recognizing the at least one specific traffic situation a corresponding successful driving strategy T7 according to the predefined criterion 22 is selected, i.e., a corresponding successful driving strategy T7 corresponding to that particular description data T4 from the network data file T9 is selected. However, in the case of traffic situations, which can be easily dealt by the artificial neural network 30, a successful driving strategy T7 can be derived by the artificial neural network 30 of the self-driving vehicle 23 to the traffic situation according to the sensor fusion data T12.

The backend server 25 sends the network data file T9 wirelessly to other artificial neural networks that are used in the self-driving vehicle 23 and other self-driving vehicles 31, 32 and 33, shown by transmission paths P13, P14 and P15 respectively. In other words, the trained artificial neural network 20 is used as a prototype for other artificial neural networks 30 that are used in the self-driving vehicle 23 and at one other self-driving vehicle 31, 32 and 33.

Overall, the example shows how the derivation of a driving strategy for a self-driving vehicle for certain specific traffic situations can be obtained.

## Claims

1. Method for deriving a driving strategy (T7) for a self-driving vehicle (23) in at least one specific traffic situation, wherein the derivation of the driving strategy (T7) is based on an artificial neural network (20), **characterized in that**
a reinforcement learning is applied to train the artificial neural network (20) based on description data (T4) of the at least one specific traffic situation, wherein for each of the at least one specific traffic situation, the description data (T4) is generated by numerical simulations of the respective specific traffic situation by means of a mathematical model (17), wherein by feeding the description data (T4) to the artificial neural network (20) several times, the artificial neural network (20) is confronted with the at least one specific traffic situation each time and derives a tentative driving strategy (T5) in reaction to the respective at least one specific traffic situation and
the reinforcement learning is applied each time the artificial neural network (20) has passed through the numerically simulated specific traffic situation on the basis of the tentative driving strategy (T5) until the tentative driving strategy (T5) is a successful driving strategy (T7) according to a predefined driving evaluation criterion (22).

2. Method according to claim 1, wherein the at least one specific traffic situation comprises at least one situation that at a point of time, there is no obstacle in front of the self-driving vehicle (23) and/or in a field of view of the self-driving vehicle (23), but at a next point of time, an obstacle appears in front of the self-driving vehicle (23) which leads to a collision of the self-driving vehicle (23) with an obstacle and/or cause damage to the self-driving vehicle (23).

3. Method according to any one of the preceding claims, wherein the predefined driving evaluation criterion (22) comprises a criterion according to which no damage to the self-driving vehicle (23) at the at least one specific traffic situation takes place.

4. Method according to any one of the preceding claims, wherein the mathematical model (17) is based on real life data (T1) of the at least one specific traffic situation collected from police records (13) for accidents.

5. Method according to any one of the preceding claims, wherein the mathematical model (17) is based on schooling data (T2) of the at least one specific traffic situation collected from driving schools records (14).

6. Method according to any one of the preceding claims, wherein the description data (t4) generated by the mathematical model (17) describes a map of a surrounding of the self-driving vehicle (23) equivalent to a map generated by means of a sensor data fusion of sensors (S1, S2) of the self-driving vehicle (23).

7. Method according to any one of the preceding claims, wherein the numerical simulation of the at least one specific traffic situation and the feeding of the generated description data (T4) by the numerical simulation to the artificial neural network (20) takes place outside the self-driving vehicle (23).

8. Method according to any one of the preceding claims, wherein the trained artificial neural network (20) is used as a prototype for other artificial neural networks (30) that are used in the self-driving vehicle (23) and at least one other self-driving vehicle (31, 32, 33).

9. Device (10) for deriving a driving strategy (T7) for a self-driving vehicle (23) in at least one specific traffic situation, wherein the device (10) is configured to perform a method based on at least one of the preceding claims.

10. Electronic control unit (26) for a self-driving vehicle (23), wherein the electronic control unit (26) comprises a processing device (29) that is designed to operate an artificial neural network (30) that is configured to recognize at least one specific traffic situation and on recognizing the at least one specific traffic situation to provide a successful driving strategy (T7) according to a predefined driving evaluation criterion (22), wherein the artificial neural network (30) is derived from a method from any one of the claims from 1 to 8.

11. Self-driving vehicle (23) comprising several sensors (S1, S2) for respectively generating a digital map of surroundings of the self-driving vehicle (23) and comprising an electronic control unit (26) according to claim 10.
